# FASCICULE DE BREVET EUROPEEN

(11) **EP 0 786 201 B1**
(45) Date de publication et mention de la délivrance du brevet: **16.05.2001**
(21) Numéro de dépôt: 97440008.7
(22) Date de dépôt: 24.01.1997
(51) Int. Cl.: A01G 3/04

(54) **Robot taille-haies télécommandé avec réglage automatique des niveaux**
Ferngesteuerter Heckenschneidroboter mit selbsttätigen Niveaueinstellung
Remote-controlled hedge-cutting robot with automatic level adjustment

(30) Priorité: 26.01.1996 FR 9601109
(43) Date de publication de la demande: 30.07.1997
(73) Titulaire: Fusilier, Jean-Marie, F-88650 Anould (FR)
(72) Inventeur: Fusilier, Jean-Marie, F-88650 Anould (FR)
(74) Mandataire: Metz, Paul

(56) Documents cités:
- BE-A- 820 188
- DE-A- 3 244 593
- DE-A- 3 430 270
- DE-A- 3 835 904
- DE-A- 4 341 892
- FR-A- 2 651 960
- FR-A- 2 710 814
- US-A- 3 805 501

## Description

La présente invention se rapporte à un robot taille-haies télécommandé à mise à niveau automatique monté sur une base-châssis formant chariot pour tailler des haies, des buissons, et plus généralement tous types de végétaux ligneux plantés en rang.

Pour l'entretien et la taille des haies, buissons, arbustes ou similaires plantés en rang, on dispose de l'instrument ou outil taille-haies classique manuel ou électroportatif connu dans le commerce.

Son utilisation s'avère particulièrement avantageuse pour de petits travaux de taille, par exemple pour l'entretien d'un buisson ou d'une haie dans le jardin d'une habitation.

L'emploi d'un tel outil nécessite cependant une certaine habileté pour la taille régulière et d'aplomb des différentes faces et du dessus des haies, car le moindre défaut de planéité ou d'équerre ressort visuellement.

Par ailleurs, le travail s'effectue en plusieurs passes successives correspondant à la taille des faces avant, supérieure et arrière de la haie. Concernant cette dernière, si son accès est rendu difficile, la taille est souvent négligée ou peu soignée.

Il faut considérer également l'effort physique nécessaire à ce travail qui s'exécute dans des positions pénibles comme par exemple en s'arc-boutant. Ce travail engendre beaucoup de fatigue notamment au niveau du dos.

Pour tenter de remédier à ces difficultés, il a notamment été proposé de fixer l'outil taille-haies sur un portique réglable.

A titre d'exemple d'un tel dispositif, on peut citer celui enseigné par la publication de brevet français n° 2,651,960 au nom de BREJON et qui comprend pour l'essentiel un portique constitué d'un mât vertical de hauteur réglable fixé sur un traîneau-support pour son appui au sol, et prolongé à son extrémité libre par une potence tournant autour d'un axe horizontal et portant l'outil taille-haies.

Ce dispositif particulièrement simple permet de tailler rapidement le dessus de haies de différentes hauteurs.

Rien n'est cependant prévu pour le réglage de l'horizontalité du traîneau-support en fonction des inégalités et/ou de la pente du terrain, rendant de ce fait le réglage de la verticalité du mât délicat.

En outre, les moyens prévus ne permettent le travail de coupe que dans un volume limité ne couvrant pas la face arrière de la haie depuis l'avant de celle-ci.

Une autre forme d'exécution d'un robot taille-haies est connue par la publication de brevet allemand n° 3,244,953 au nom de Rohnstock.

Ce dispositif est constitué d'un bâti vertical rigide monté fixe sur un châssis-support formant chariot.

Le bâti, formé de deux pièces de flanc parallèles réunies par une traverse d'extrémité supérieure, sert au guidage en élévation d'un chariot mobile porteur de l'outil taille-haies par l'intermédiaire d'un bras monobloc s'étendant généralement horizontalement et mobile en coulissement et/ou en pivotement.

Ce robot taille-haies, plus particulièrement destiné à un usage professionnel, permet de tailler de longues rangées de haies ou de buissons, par exemple séparant les deux chaussées d'une voie de circulation pour automobiles.

Sa zone de travail peut être adaptée aux nécessités de la coupe, et l'on peut notamment tailler les faces avant et le dessus des haies par pivotement de l'outil taille-haies autour de l'axe longitudinal par lequel il est fixé sur le bras-support.

La zone de travail de ce dispositif connu est néanmoins considérablement limitée notamment par ledit bras porte-outil rigide qui interdit l'accès à la face opposée de la haie.

Par ailleurs, aucun dispositif pour la compensation des irrégularités du terrain et le réglage approprié de l'horizontalité du châssis-support n'est prévu.

Ces dispositifs ne permettent pas de satisfaire à toutes les contraintes d'un travail rapide, continu et systématique.

Il existe ainsi un besoin pour un dispositif taille-haies perfectionné permettant de couvrir la face arrière des haies ou buissons, et plus généralement tous types de végétaux ligneux plantés en rang, adaptable aux particularités de la taille et permettant de couvrir la face arrière des haies ou buissons, dispositif comportant un moyen de compensation des irrégularités du terrain pour le réglage approprié de l'horizontalité du châssis-support formant chariot.

La présente invention a pour but de répondre à cette attente en proposant un robot taille-haies perfectionné monté sur une base-châssis formant chariot et comportant des moyens de réglage de son horizontalité pour la compensation des irrégularités et/ou du dévers du terrain, l'instrument ou outil taille-haies du genre connu dans le commerce étant porté par un segment porte-outil monté pivotant sur un bras oscillant, ce dernier étant lui-même monté sur la base-châssis par l'intermédiaire d'un bâti central multiarticulé et d'une platine-support portée par un bâti vertical fixe.

Selon un premier avantage essentiel de l'invention, le réglage automatique et continu de la base-châssis dans une position horizontale stable de travail au fur et à mesure de l'avance du robot, par exemple le long d'une haie, permet de s'affranchir des irrégularités du terrain et de réaliser une taille d'une très grande régularité sur toute la longueur de ladite haie.

Selon un autre de ses avantages, la commande d'extension simultanée ou séparée des différentes unités modulaires constituant le robot à tailler les haies conforme à l'invention permet de faire passer celui-ci d'une position de repos à l'état replié permettant son transport dans un véhicule utilitaire de petite taille, par exemple une camionnette ou sur le plateau d'une remorque, à une position de travail en extension vers le haut permettant d'adapter le volume de sa zone de travail aux impératifs de la taille, et notamment d'atteindre les différentes faces et le dessus de toutes les haies courantes.

Il est ainsi possible de tailler successivement les faces avant, de dessus et arrière d'une haie en une seule passe de coupe, permettant de réaliser des gains de temps appréciables.

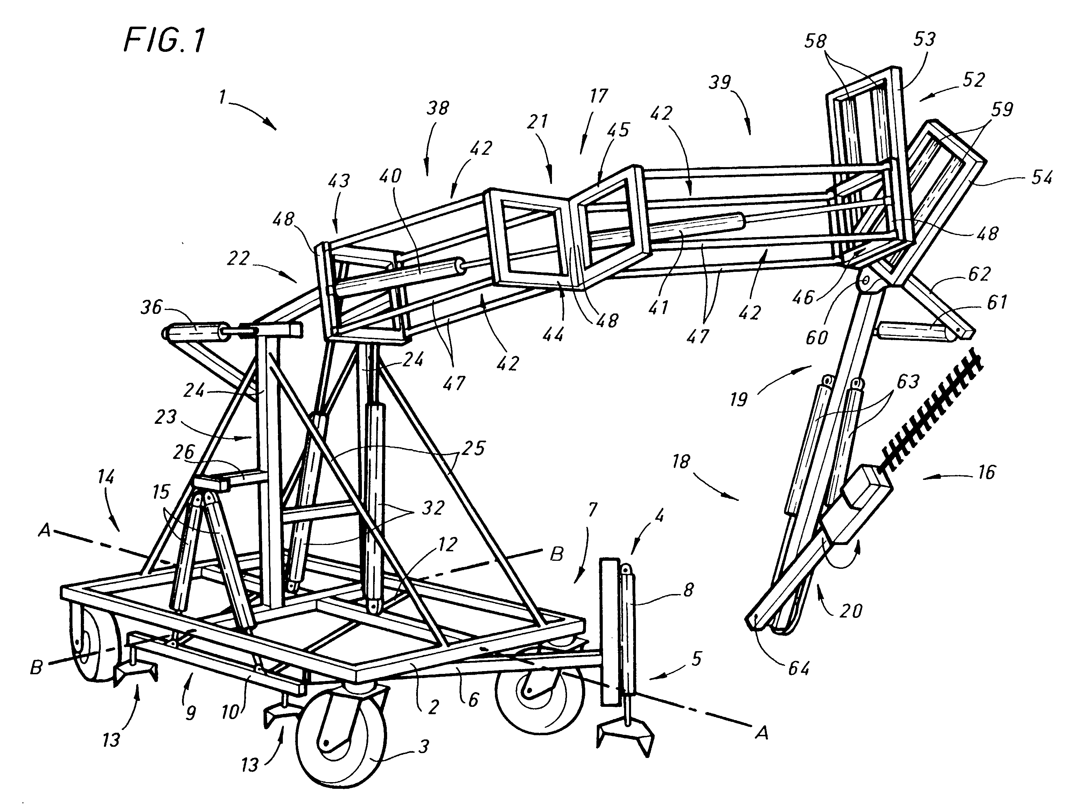

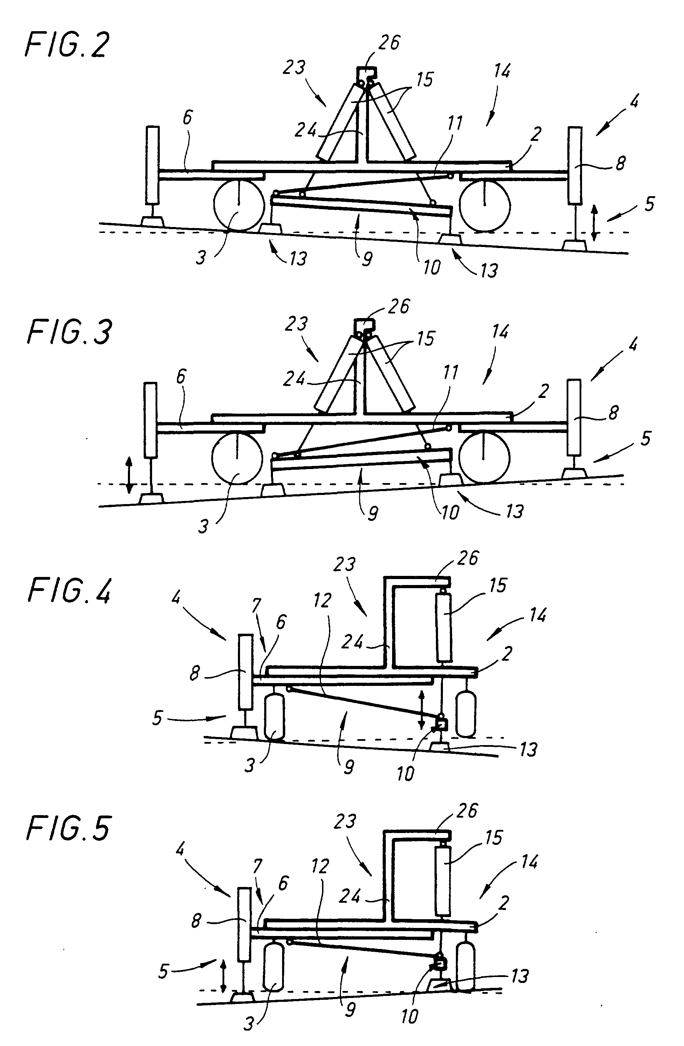

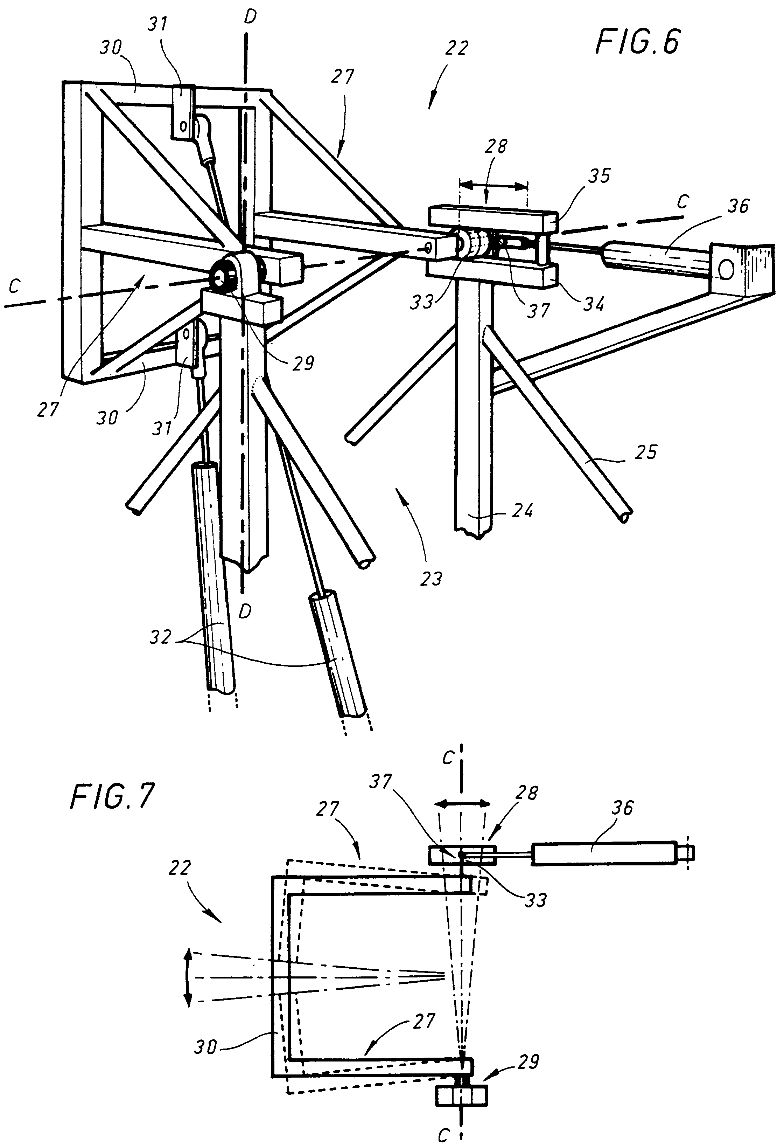

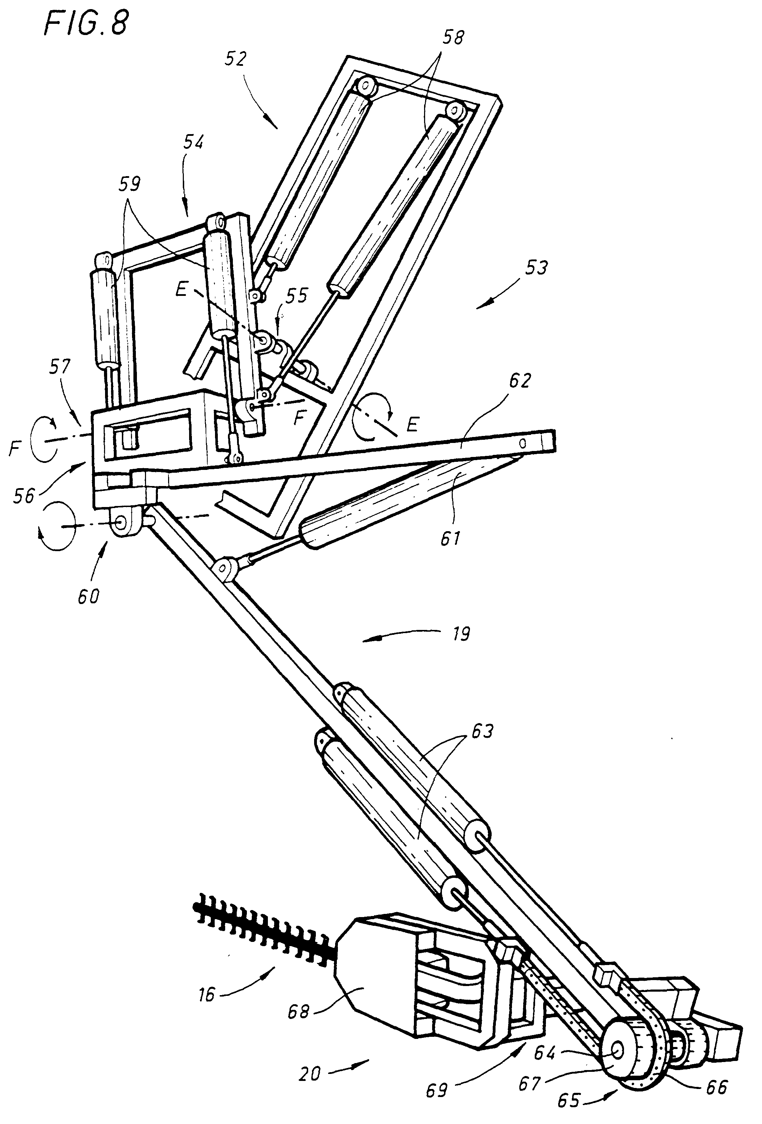

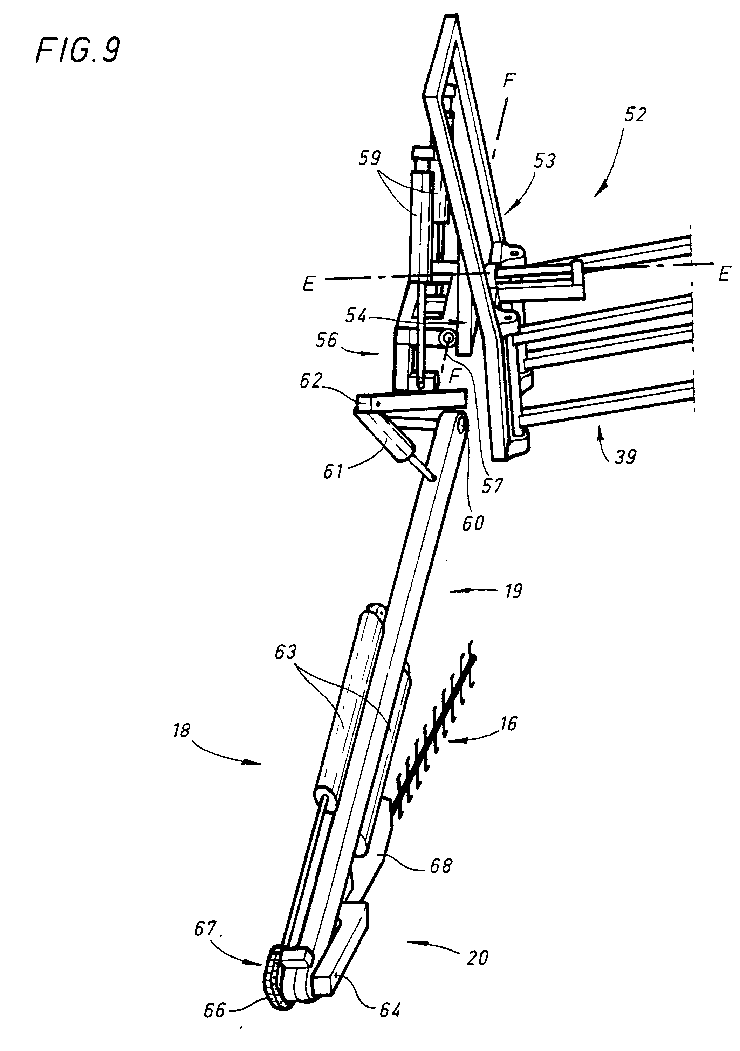

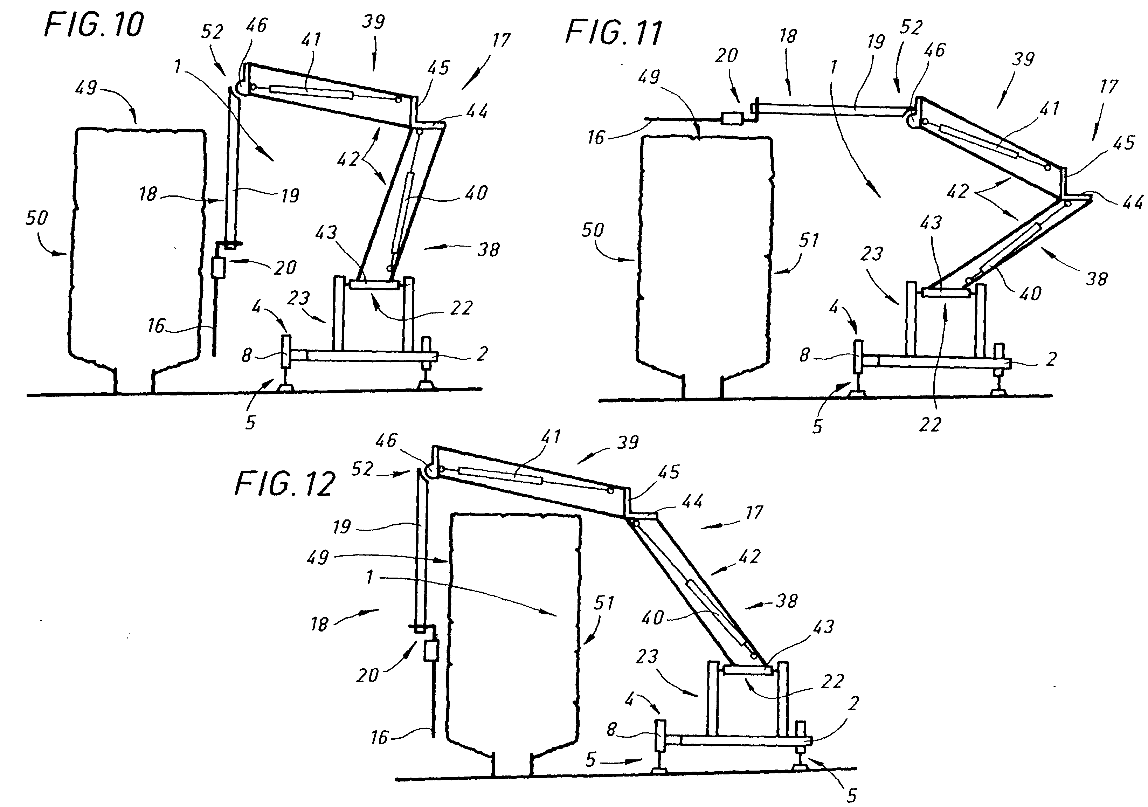

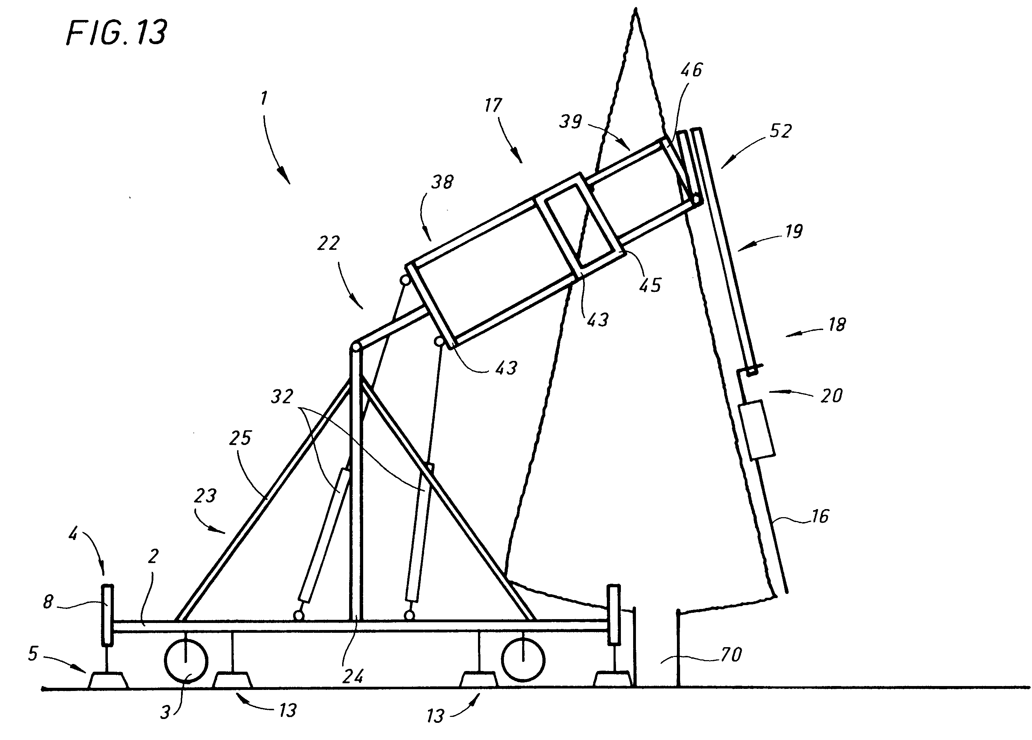

D'autres caractéristiques et avantages de la présente invention sont consignés dans la description qui suit effectuée selon un mode d'exécution préféré et non-limitatif, en référence au dessin accompagnant sur lequel :
. la figure 1 est une vue générale en perspective du robot à tailler les haies conforme à l'invention en position déployée de travail ;
. les figures 2 à 5 sont des vues schématiques de principe du réglage de l'angle d'inclinaison de la base-châssis par rapport à chacun de ses axes longitudinal et transversal en fonction du dévers du terrain sur lequel travaille le robot de la figure 1 ;
. la figure 6 est une vue de détail en perspective de l'articulation de la platine-support de la flèche basculante multiarticulée sur le bâti vertical fixe de la base-châssis ;
. la figure 7 est une vue schématique de dessus sur laquelle on a représenté le débattement en pivotement axial de la platine-support pour la correction des éventuelles erreurs d'alignement de la base-châssis par rapport au plan de coupe du robot ;
. la figure 8 est une vue de détail de l'articulation composite à la cardan du bras de coupe et de son segment porte-outil associé à l'extrémité libre de la flèche multiarticulée ;
. la figure 9 est une vue de détail de l'ensemble de coupe formé du bras de coupe et du segment porte-outil associé ;
. les figures 10 à 12 sont des vues schématiques de principe de l'application du robot conforme à l'invention à la taille des différentes faces d'une haie ;
. la figure 13 est une vue schématique de principe de l'application du robot conforme à l'invention à la taille d'un conifère.

La présente invention a pour idée générale inventive de fournir un robot taille-haies à mise à niveau automatique pour la compensation des irrégularités du terrain sur lequel il se déplace, et à zone de travail adaptable aux nécessités de coupe permettant en plus de couvrir la face opposée, par exemple d'une haie, en pilotage télécommandé.

A cette fin, et selon la variante d'exécution préférée et non-limitative de l'invention, le robot télécommandé à tailler les haies représenté dans son ensemble sur la figure 1 et désigné par la référence générale 1 est constitué d'une base-châssis 2 formant un chariot avec des moyens de roulement tels que 3, par exemple quatre roues dont deux à direction fixe et deux autres orientables pour son déplacement et son orientation sur le terrain.

Selon une première caractéristique essentielle de l'invention, la base-châssis 2 comporte des moyens de réglage et de stabilisation permettant un réglage indépendant de son angle d'inclinaison par rapport à chacun de ses axes de pivotement longitudinal et transversal pour sa mise en position horizontale stable de travail.

Ces moyens comprennent en particulier des vérins de compensation des irrégularités et/ou du dévers du terrain sur lequel le robot travaille, ainsi que des moyens électroniques de mise à niveau.

Plus précisément, la base-châssis 2 présente à chacune de ses extrémités avant et arrière un moyen d'appui 4 avec réglage de l'horizontalité longitudinale.

Chacun de ces moyens d'appuis 4 se compose de façon non-limitative d'une béquille 5, par exemple du genre tripode, montée à l'extrémité libre d'un longeron extensible 6 de sorte que, en position sortie desdits longerons 6, les béquilles 5 viennent de part et d'autre à distance d'un premier bord longitudinal arrière 7 de la base-châssis 2.

Comme représenté sur les figures 2 et 3, les béquilles 5, actionnées chacune par un vérin hydraulique vertical de compensation 8, descendent sous l'effet de celui-ci jusqu'à prendre appui au sol, permettant de modifier la position de chacune des extrémités du premier bord longitudinal arrière 7 de la base-châssis 2 afin de les amener dans un même plan d'horizontalité longitudinale.

Conformément à l'invention, les moyens de réglage de l'horizontalité de la base-châssis 2 sont complétés par un ensemble de soulèvement-basculement 9 à cadre mobile 10 disposé sous la base-châssis 2 et relié à celle-ci par l'intermédiaire de tiges longitudinales telles que 11 et transversales telles que 12 qui, alternant les unes avec les autres, sont montées articulées à pivotement par leurs extrémités entre le cadre mobile 10 et la base-châssis 2. Le cadre 10 est ainsi mobile en basculement autour de deux lignes d'articulation référencées A-A et B-B correspondant aux axes de symétrie longitudinale et transversale de la base-châssis 2.

Le cadre mobile 10 prend appui sur le sol par deux béquilles supplémentaires telles que 13 pouvant également être du genre tripode et qui permettent de soulever la base-châssis 2 dans sa deuxième partie longitudinale 14 pour garantir son horizontalité transversale.

A cette fin, le basculement du cadre 10 par rapport au châssis 2 est assuré par deux vérins de compensation jumelés en triangle tels que 15, articulés sur le cadre mobile 10 selon trois degrés de liberté.

Sous l'effet conjugué de ces deux vérins 15 (figures 3 et 4), le cadre mobile 10 s'incline latéralement puis, après appui au sol par l'intermédiaire de ses béquilles d'appui 13, provoque le soulèvement de la base-châssis 2 qui bascule autour de la ligne d'articulation A-A. On peut ainsi agir sur la position de la deuxième partie longitudinale 14 de la base-châssis 2, jusqu'à ce que le plan défini par celle-ci soit également ramené horizontal dans sa direction transversale.

En complément, la commande différentielle des vérins 15 provoque le basculement de la base-châssis 2 autour de la ligne d'articulation B-B pour un deuxième réglage d'horizontalité longitudinale.

Les vérins de compensation 8 et 15 sont actionnés par l'intermédiaire d'une centrale hydraulique. Ils peuvent être pilotés par le récepteur de radiocommande à travers une unité de gestion ou manuellement par l'opérateur pour le réglage de l'horizontalité de la base-châssis 2 .

Selon une variante d'exécution préférée de l'invention, ils sont pilotés par des servovannes à partir de blocs de distribution hydrauliques en relation avec des inclinomètres, par exemple du genre pendule de Foucault ou à effet Hall ou tout autre. Ces inclinomètres permettent le réglage commandé ou automatique avec correction automatique de niveau ou de position angulaire de la base-châssis 2 pendant le travail du robot selon l'invention.

De façon générale, le robot taille-haies selon l'invention est actionné à partir d'une centrale hydraulique à travers plusieurs blocs de distribution hydrauliques en mode tout ou rien et proportionnel. Ces blocs de distribution sont pilotés par le récepteur de radiocommande.

Selon la seconde caractéristique essentielle de l'invention, l'instrument ou l'outil électroportatif taille-haies référencé 16 du type connu est porté à l'extrémité d'une flèche basculante multiarticulée 17 formant portique par un ensemble de coupe 18 constitué d'un bras de coupe 19 prolongé par un segment porte-outil 20. La flèche 17, constituée d'un corps montant central 21 et d'une platine-support 22, est montée sur la base-châssis 2 par l'intermédiaire d'un bâti vertical fixe 23.

Celui-ci affecte la forme générale non-limitative d'un H et est constitué de deux longerons parallèles tels que 24 réunis et stabilisés par des tiges d'appui telles que 25 montées en oblique entre lesdits longerons 24 et la base-châssis 2 (figure 1). Il comporte une traverse supplémentaire 26 servant de point d'appui aux vérins 15 de basculement du cadre mobile 10.

Le bâti vertical fixe 23 est prolongé vers le haut (figure 6) par la platine-support 22 constituée de deux pièces de flanc parallèles telles que 27 de forme générale triangulaire, raccordées à pivotement par leurs sommets respectifs à l'extrémité dudit bâti rigide 23 par l'intermédiaire de deux paliers 28 et 29.

La platine-support 22 est complétée par deux traverses d'accouplement telles que 30 pour la réunion des pièces de flanc 27, et comporte également des pattes de fixation telles que 31 s'étendant parallèlement à mi-distance des pièces de flanc 27, et servant de point d'appui à deux vérins de commande de basculement tels que 32 par exemple sur chape rotulée.

Comme il ressort des figures 1 et 6, ces vérins de basculement 32 sont raccordés par leur tige aux traverses de la platine-support 22 d'une part, et par leur cylindre à la base-châssis 2 d'autre part, et réalisent le basculement de ladite platine 22 dans le plan de symétrie longitudinal de la base-châssis 2, vers le haut ou vers le bas autour de l'axe formé par les paliers 28 et 29 et matérialisé par la ligne C-C sur les figures.

La platine-support 22 peut également pivoter de part et d'autre du plan de symétrie longitudinal de la base-châssis 2 (figures 6 et 7), autour d'un axe vertical matérialisé par la ligne D-D sur les figures.

Ce mouvement a pour but de corriger les éventuels désalignements de la flèche basculante multiarticulée 17 dûs à un défaut d'alignement du plan de coupe dans lequel travaille l'ensemble de coupe 18 par rapport à la direction de la haie.

A cet effet, le palier 28 est constitué d'un ensemble 33 à deux galets disposés côte-à-côte et montés mobiles sans jeu sur deux pistes de roulement horizontales, l'une inférieure 34 et l'autre supérieure 35, à l'extrémité du longeron 24 correspondant du bâti 23. Le palier 29 oscillant en regard est formé par exemple d'une articulation pouvant se déformer lorsqu'elle est sollicitée en pivotement axial.

Finalement, un vérin pousseur 36 raccordé par sa tige d'actionnement à un bout d'axe 37 solidaire de l'ensemble 33 à deux galets fournit la force de réalignement qui provoque le pivotement de la platine 22 de part et d'autre du plan de symétrie longitudinal de la base-châssis 2, entre deux positions limites opposées déterminées par la course du vérin 36 comme représenté sur la figure 7.

Conformément à l'invention, la platine-support 22 est prolongée par le corps montant central 21 constitué de façon non-limitative de deux unités modulaires d'extension inférieure 38 et supérieure 39 actionnées en déploiement et en rabattement par des vérins de déploiement respectivement 40 et 41 commandés par la centrale hydraulique citée précédemment.

Les deux unités modulaires d'extension 38 et 39 sont préférentiellement de même structure, formées chacune de deux pièces de flanc parallèles telles que 42 raccordées à pivotement par leurs extrémités à des éléments plans de base inférieurs 43,45 et supérieurs 44,46 à la manière d'un parallélogramme déformable.

Chaque pièce de flanc 42, constituée de deux longerons parallèles tels que 47, est articulée à pivotement par ses extrémités aux éléments de base inférieurs 43,45 et supérieurs 44,46 au moyen de deux barres de jumelage telles que 48. Pour une meilleure rigidité de la structure, les longerons 47 homologues de chacune des pièces de flanc 42 peuvent être réunis entre eux et contreventés, par exemple au moyen d'une traverse ou d'un jeu de tiges croisées.

Dans la forme d'exécution représentée sur les figures accompagnantes, l'élément de base inférieur 43 de l'unité d'extension inférieure 38 se confond avec la base de la platine-support 22 sur laquelle celle-ci est articulée par l'intermédiaire de ses deux pièces de flanc 42 à leur base.

Ces pièces de flanc 42 sont articulées à leur sommet à l'élément de base supérieur 44 auquel est raccordé l'élément de base inférieur 45 correspondant de l'unité d'extension supérieure 39 selon un angle préférentiellement de 90° réalisant le renvoi de ladite unité modulaire supérieure 39 au dessus, par exemple d'une haie 49, perpendiculairement à l'axe de symétrie longitudinale de la base-châssis 2 comme décrit en détail ci-dessous.

De même, les pièces de flanc 42 de l'unité d'extension supérieure 39 sont articulées à pivotement par leurs extrémités entre les éléments de base inférieur 45 et supérieur 46 de ladite unité d'extension 39.

Les vérins de déploiement 40,41 s'étendent en oblique entre les pièces de flanc parallèles 42 des unités d'extension modulaires inférieure 38 et supérieure 39, entre deux barres de jumelage 48 opposées.

L'ensemble des moyens ci-dessus peut être remplacé de façon équivalente par un châssis simple ou motorisé sur lequel est montée fixe ou inclinable une tourelle portant un bras multiarticulé, par exemple le bras d'un robot industriel.

Selon l'un des avantages essentiels de l'invention, la commande d'extension séparée ou simultanée des vérins de déploiement 40,41 permet de faire passer les unités modulaires d'extension 38,39 correspondantes d'une position affaissée de repos dans laquelle leurs pièces de flanc 42 respectives sont rabattues à recouvrement l'une sur l'autre, à une position de travail en extension dans laquelle les unités modulaires forment le portique, permettant notamment de couvrir la haie 49 sur sa face arrière 50 depuis la face avant 51 de cette dernière.

Conformément à l'invention, l'ensemble de coupe 18 formé du bras de coupe 19 et du segment porte-outil 20 associé est monté articulé à la cardan par l'intermédiaire d'une articulation complexe 52 à l'extrémité de la flèche multiarticulée 17 (figure 8).

Cette articulation complexe 52 est constituée d'un premier et d'un second cadre-châssis respectivement 53 et 54, le premier cadre-châssis 53 étant monté fixe à la suite de l'élément plan de base supérieur 46 de l'unité d'extension supérieure 39.

Le second cadre-châssis 54 est articulé à pivotement sur le premier autour d'un axe-support 55 s'étendant selon une direction représentée par la ligne E-E sur les figures, perpendiculaire au plan dudit premier cadre-châssis 53, pour le réglage de l'inclinaison du bras de coupe 19 dans son plan de travail.

L'articulation complexe 52 se poursuit par une platine-support 56 articulée à pivotement sur le cadre-châssis 54 autour d'un axe 57 s'étendant selon une direction matérialisée par la ligne F-F sur les figures, perpendiculaire à la direction E-E ci-dessus, c'est-à-dire parallèle au plan du premier cadre-châssis 53, pour l'orientation convenable de l'ensemble de coupe 18 en fonction de l'inclinaison des faces de la haie 49 à tailler.

Conformément à la présente invention, l'actionnement séquentiel d'un premier ensemble à deux vérins hydrauliques de commande tels que 58 permet de réaliser le pivotement du cadre-châssis 54 de l'angle voulu vers le haut ou vers le bas autour de son axe-support 55.

Ce mouvement est communiqué au bras de coupe 19 par l'intermédiaire de la platine-support 56 et permet avantageusement le réglage approprié de son inclinaison par rapport à la direction verticale.

Le mouvement de basculement de la platine-support 56 autour de son axe-support 57 est réalisé par l'intermédiaire d'un second ensemble à deux vérins hydrauliques de commande tels que 59. Ce mouvement a pour but de permettre le pivotement de l'ensemble de coupe 18 entre deux positions limites déterminées par la course des vérins 59, de façon à s'assurer que le plan de travail dudit ensemble de coupe 18 est toujours parallèle aux deux faces verticales et à la face horizontale de la haie 49 à tailler.

Il faut bien remarquer que les vérins 59 servent notamment à faire passer le bras multiarticulé de la position verticale de taillage à la position de taillage horizontal.

L'ensemble de coupe 18 peut ainsi être avantageusement immobilisé dans une position dans laquelle il s'étend par exemple horizontalement ou bien encore verticalement pour couvrir le dessus et les faces latérales de la haie 49. Il peut également être immobilisé dans une position inclinée intermédiaire quelconque, selon un angle déterminé de coupe pour couvrir des faces de haies, de buissons ou autres s'étendant en oblique.

Cet angle de coupe référencé par rapport à la verticale peut être mémorisé à partir de l'émetteur de télécommande.

Comme déjà décrit ci-dessus et en référence à la figure 9, le segment porte-outil 20 est monté à pivotement dans le prolongement du bras de coupe 19, ce dernier étant lui-même monté à pivotement autour d'un axe-pivot 60 sur la platine-support 56.

Un premier vérin hydraulique 61 de relèvement et d'immobilisation en position stable de travail du bras de coupe 19 est monté entre celui-ci et une barre d'appui 62 raccordée à la platine 56.

Deux autres vérins tels que 63 disposés parallèlement à et de part et d'autre du bras de coupe 19 actionnent le segment porte-outil 20 en mouvements pendulaires autour de son axe de pivotement 64 sur ledit bras de coupe 19. Dans ce but, le mouvement de translation rectiligne des tiges d'actionnement des vérins 63 est transformé en mouvement de pivotement du segment porte-outil 20 par l'intermédiaire d'un renvoi 65 à chaîne 66 dont les extrémités sont reliées auxdites tiges d'actionnement des vérins 63, ladite chaîne étant en prise avec une roue dentée 67 montée à l'extrémité libre du segment porte-outil 20 qu'elle entraîne ainsi en pivotement.

Ce dispositif de renvoi est le moyen équivalent mais onéreux d'un vérin rotatif.

Enfin, l'outil taille-haies 16 est monté sur le segment porte-outil 20 au moyen d'un carter 68 pour pivoter autour de l'axe longitudinal dudit segment porte-outil 20 entre deux positions extrêmes séparées de 180° l'une de l'autre. Ce mouvement, matérialisé au moyen d'une flèche sur les figures, est réalisé par l'intermédiaire d'un dispositif de basculement 69 à doigt de verrouillage pour l'immobilisation du carter 68 dans l'une ou l'autre des deux positions extrêmes de travail ci-dessus.

Comme il ressort des figures 10 à 12 accompagnantes, et selon l'avantage essentiel de l'invention, la flèche basculante multiarticulée 17 forme en position déployée un portique dont l'espace de travail est suffisant pour permettre notamment de couvrir les faces arrière et de dessus de la haie 49 depuis la face avant de celle-ci, en une passe unique de taille.

Ce résultat original est atteint grâce à la structure en parallélogramme déformable des unités modulaires formant cette flèche 17. Leur commande en extension séparée ou simultanée et l'orientation convenable du plan de travail de l'ensemble de coupe 18 permettent en effet d'adapter continûment le volume de travail de la flèche 17 aux particularités de la coupe. Le cas échéant, le volume de travail du robot à tailler les haies conforme à la présente invention peut être augmenté par addition d'une ou plusieurs unités modulaires supplémentaires de même type que les unités modulaires inférieure 38 et supérieure 39 décrites précédemment ou par prolongation du bras de coupe 19 ou du segment 20 porte-outil.

Par ailleurs, le robot selon l'invention peut tailler l'avant, le dessus et l'arrière d'une haie sur une longueur de plusieurs mètres sans que la base-châssis change de place.

Comme représenté sur la figure 13, l'utilisation du présent robot n'est pas limitée à la taille des seules haies et peut être envisagée pour tailler tous types de végétaux ligneux de forme géométrique différente tels que, par exemple, un conifère 70.

## Revendications

1. Robot taille-haies comprenant un support roulant automoteur à quatre roues ou pouvant être conduit manuellement ou attelé à un tracteur servant de base-châssis (2) pour tailler des haies, des buissons, et plus généralement tous types de végétaux ligneux plantés en rang(s), caractérisé en ce qu'il est constitué :
. d'une flèche basculante multiarticulée (17) à corps central (21) et platine-support (22) constituant une de ses extrémités par laquelle le corps central (21) est monté articulé sur un bâti vertical (23) porté par la base-châssis (2), la flèche basculante pouvant passer d'une position affaissée de repos à une position de travail en extension dans laquelle elle forme un portique,
. d'une articulation complexe (52) formant l'autre des extrémités de la flèche basculante (17) portant un ensemble de coupe (18) constitué d'un bras de coupe (19) actionné en mouvements de pivotement dans un plan de travail et prolongé par un segment porte-outil (20) du type taille-haies (16), lui même monté pivotant en extrémité du bras de coupe (19),
. de moyens (4,9) de réglage et de stabilisation de la base-châssis (2) ou du bâti vertical (23) avec mise à niveau automatique permettant un réglage indépendant de son angle d'inclinaison par rapport à chacun de ses axes longitudinal et transversal pour sa mise en position horizontale stable de travail.

2. Robot taille-haies selon la revendication 1, caractérisé en ce que le bâti vertical (23) affecte la forme générale d'un H et est constitué de deux longerons verticaux (24) réunis et contreventés par des tiges d'appui (25) montées en oblique entre lesdits longerons (24) et la base-châssis (2).

3. Robot taille-haies selon la revendication 2, caractérisé en ce que la platine-support (22) est raccordée à pivotement vers le haut ou vers le bas dans le plan de symétrie longitudinal de la base-châssis (2), ladite platine-support (22) étant également montée à pivotement pour basculer de part et d'autre du plan de symétrie longitudinal de la base-châssis (2) sous l'action d'une force motrice de réalignement agissant sur une articulation formée par un palier (28) constitué d'un ensemble (33) à deux galets montés mobiles sans jeu sur deux pistes de roulement horizontales inférieure (34) et supérieure (35) à l'extrémité du longeron (24) correspondant dudit bâti (23), et un palier (29) disposé en regard formé d'une articulation oscillant selon un pivotement axial, cette articulation reliant la platine-support (22) au bâti fixe (23).

4. Robot taille-haies selon la revendication 3, caractérisé en ce que la force motrice de réalignement est fournie par un vérin pousseur (36) raccordé par sa tige à un bout d'axe (37) solidaire de l'ensemble (33) à deux galets mobiles réalise le pivotement de la platine (22) de part et d'autre dudit plan de symétrie longitudinal de la base-châssis (2), entre deux positions limites opposées déterminées par la course du vérin (36) et en ce que deux vérins de commande (32) montés sur chape rotulée entre ladite platine (22) et la base-châssis (2) provoquent le basculement de la platine-support (22) dans le plan de symétrie longitudinal de la base-châssis (2) dans le but de réaliser l'alignement de la direction générale du plan de travail avec celle de la haie.

5. Robot taille-haies selon l'une quelconque des revendications 2 à 4, caractérisé en ce que le corps montant central (21) de la flèche (17) est constitué d'au moins deux unités d'extension modulaires inférieure (38) et supérieure (39) actionnables séparément ou simultanément en déploiement et en rabattement, et raccordées entre elles selon un angle de 90° réalisant le renvoi de l'unité d'extension supérieure (39) au dessus d'une haie (49) et en ce que les unités d'extension modulaires (38,39) sont raccordées à pivotement par leurs extrémités à des éléments plans de base inférieurs (43,45) et supérieurs (44,46) à la manière d'un parallélogramme déformable, lesdites unités d'extension étant actionnées chacune en déploiement et en rabattement par un vérin de déploiement respectivement (40) et (41).

6. Robot taille-haies selon la revendication 5, caractérisé en ce que l'articulation complexe (52) est constituée d'un premier et d'un second cadre-châssis respectivement (53) et (54), le premier cadre-châssis (53) étant monté fixe à la suite de l'unité modulaire d'extension supérieure (39), et le second cadre-châssis étant articulé à pivotement sur ledit premier cadre-châssis (53) autour d'un axe-support (55) s'étendant selon une direction perpendiculaire au plan de ce premier cadre-châssis (53), l'articulation complexe (52) se poursuivant par une platine (56) articulée à pivotement sur le second cadre-châssis (54) autour d'un axe (57) s'étendant selon une direction perpendiculaire à l'axe-support (55) précédent et en ce que le pivotement du cadre-châssis (54) autour de son axe-support (55) est réalisé par l'intermédiaire d'un ensemble de deux vérins hydrauliques de commande (58) dont l'actionnement séquentiel permet de faire pivoter ledit cadre-châssis (54) de l'angle voulu vers le haut ou vers le bas autour de son axe-support (55), le mouvement de basculement de la platine-support (56) autour de son axe (57) d'articulation sur ledit cadre-châssis (54) étant réalisé par l'intermédiaire d'un second ensemble à deux vérins hydrauliques de commande (59).

7. Robot taille-haies selon l'une quelconque des revendications précédentes, caractérisé en ce que le segment porte-outil (20) est monté à pivotement dans le prolongement du bras de coupe (19) autour d'un axe-pivot (64), ledit bras de coupe (19) étant lui-même monté à pivotement autour d'un axe-pivot (60) sur la platine-support (56) et en ce qu'un premier vérin (61) de maintien et d'immobilisation en position stable de travail du bras de coupe (19) est monté entre celui-ci et une barre d'appui (62) raccordée à la platine-support (56), et en ce que deux autres vérins (63) disposés parallèlement à et de part et d'autre dudit bras de coupe (19) actionnent le segment porte-outil (20) en mouvements pendulaires autour de son axe-pivot (64) sur ledit bras de coupe (19) par l'intermédiaire d'un système de renvoi (65).

8. Robot taille-haies selon la revendication 7, caractérisé en ce que le système de renvoi (65) comporte une chaîne (66) dont les extrémités sont reliées aux tiges d'actionnement des vérins (63), ladite chaîne (66) étant en prise avec une roue dentée (67) montée entraînante à pivotement à l'extrémité libre du segment porte-outil (20).

9. Robot taille-haies selon l'une quelconque des revendications précédentes, caractérisé en ce que l'outil taille-haies (16) est porté par le segment porte-outil (20) par l'intermédiaire d'un carter (68) pouvant pivoter autour de l'axe de symétrie longitudinal dudit segment porte-outil (20) entre deux positions extrêmes de travail séparées de 180° dans l'une ou l'autre desquelles il est immobilisé.

10. Robot taille-haies selon l'une quelconque des revendications précédentes, caractérisé en ce que, pour son réglage et sa stabilisation en position stable de travail, la base-châssis (2) présente deux moyens d'appuis avant et arrière (4) pour le réglage de son horizontalité longitudinale venant à distance de part et d'autre d'un premier bord longitudinal (7) de ladite base-châssis (2), les moyens de réglage de l'horizontalité de la base-châssis (2) étant complétés par un ensemble de soulèvement-basculement (9) à cadre mobile (10) en basculement autour des axes longitudinal et transversal de la base (2) pour garantir l'horizontalité transversale de cette base-châssis (2).

11. Robot taille-haies selon la revendication 10, caractérisé en ce que les moyens d'appuis (4) se composent chacun d'une béquille (5) chacune montée à l'extrémité libre d'un longeron extensible (6), et actionnées par un vérin vertical de compensation (8) sous l'effet duquel elles descendent jusqu'à prendre appui au sol, permettant de modifier la position de chacune des extrémités du premier côté longitudinal (7) de la base-châssis (2) afin de les amener dans un même plan d'horizontalité longitudinale, et en ce que le cadre mobile (10) est disposé sous la base-châssis (2) et relié à celle-ci par l'intermédiaire de tiges longitudinales (11) et transversales (12) qui, alternant les unes avec les autres, sont montées articulées à pivotement par leurs extrémités entre le cadre mobile (10) et la base-châssis (2), le cadre (10) étant complété par deux béquilles (13) permettant, par appui au sol, de soulever la base-châssis (2) dans sa deuxième partie longitudinale (14) pour garantir son horizontalité transversale, l'inclinaison dudit cadre (10) étant assurée par deux vérins de compensation homologues (15) articulés sur le cadre mobile (10) selon trois degrés de liberté.

12. Robot taille-haies comprenant un support roulant automoteur à quatre roues ou pouvant être conduit manuellement ou attelé à un tracteur servant de plate-forme roulante pour tailler des haies, des buissons, et plus généralement tous types de végétaux ligneux plantés en rang(s), caractérisé en ce qu'il est constitué :
. d'un bras de robot industriel monté articulé sur la plate-forme roulante, le bras de robot industriel pouvant passer d'une position affaissée de repos à une position de travail en extension dans laquelle il forme un portique,
. d'une articulation complexe (52) formant l'extrémité du bras de robot portant un ensemble de coupe (18) constitué d'un bras de coupe (19) actionné en mouvements de pivotement dans un plan de travail et prolongé par un segment porte-outil (20) du type taille-haies (16), lui même monté pivotant en extrémité du bras de coupe (19),
. de moyens (4,9) de réglage et de stabilisation de la plate-forme roulante avec mise à niveau automatique permettant un réglage indépendant de son angle d'inclinaison par rapport à chacun de ses axes longitudinal et transversal pour sa mise en position horizontale stable de travail.

13. Robot taille-haies selon la revendication 1 caractérisé en ce que le fonctionnement est télécommandé et géré à partir d'une unité de gestion et de commande agissant sur des distributeurs hydrauliques fonctionnant en tout ou rien et en proportionnel à partir d'un fluide moteur sous pression générée par une centrale hydraulique.

14. Robot taille-haies selon la revendication 1 caractérisé en ce que le réglage de niveau des plans de coupe horizontaux et verticaux est géré automatiquement à partir des inclinomètres.

15. Robot taille-haies selon la revendication 1 caractérisé en ce que l'angle de coupe référencé par rapport à la verticale est mémorisé.

## Claims

1. Hedge-cutting robot comprising a four-wheeled movable support which is self-propelled or which can be driven manually or be coupled to a tractor acting as a chassis-base (2) for cutting hedges, bushes and, more generally, all types of woody vegetation planted in a row(s), characterised in that it comprises:
- a multi-articulated tilting arm (17) having a central member (21) and a support stage (22) forming one of the ends thereof, by means of which the central member (21) is mounted in articulation to an upright frame (23) carried by the chassis-base (2), it being possible for the tilting arm to move from a lowered rest position to an extended work position in which it forms a support frame,
- a complex articulation (52) forming the other end of the tilting arm (17) carrying a cutting assembly (18) formed by a cutting arm (19), operated to move pivotably in a work plane and extended by a tool-holder segment (20) of the hedge-cutting type (16), itself mounted to pivot at the end of the cutting arm (19),
- means (4, 9) for adjusting and stabilising the chassis-base (2) or the upright frame (23) with automatic levelling allowing independent adjustment of the angle of inclination thereof relative to each of the longitudinal and transverse axes thereof for arrangement thereof in a stable horizontal work position.

2. Hedge-cutting robot according to claim 1, characterised in that the upright frame (23) is generally H-shaped and is formed by two upright side members (24) which are connected and cross-braced by support rods (25) mounted obliquely between those side members (24) and the chassis-base (2).

3. Hedge-cutting robot according to claim 2, characterised in that the support stage (22) is connected to pivot upwards or downwards in the longitudinal plane of symmetry of the chassis-base (2), the support stage (22) also being mounted to pivot in order to tilt on both sides of the longitudinal plane of symmetry of the chassis-base (2) under the effect of a realigning motive force acting on an articulation formed by a bearing (28) formed by an assembly (33) having two rollers mounted movably without clearance on two lower (34) and upper (35) horizontal roller tracks at the end of the corresponding side member (24) of the frame (23), and a bearing (29) arranged opposite formed by an articulation which pivots axially, that articulation connecting the support stage (22) to the fixed frame (23).

4. Hedge-cutting robot according to claim 3, characterised in that the realigning motive force is supplied by a pushing ram (36), which is connected by its rod to a stub axle (37) which is integral with the assembly (33) having two movable rollers, and produces the pivoting of the stage (22) on both sides of the longitudinal plane of symmetry of the chassis-base (2), between two opposing end positions determined by the course of the ram (36), and in that two control rams (32) swivel-mounted between the stage (22) and the chassis-base (2) cause the tilting of the support stage (22) in the longitudinal plane of symmetry of the chassis-base (2) with the objective of effecting the alignment of the general direction of the work plane with that of the hedge.

5. Hedge-cutting robot according to any one of claims 2 to 4, characterised in that the central upright member (21) of the arm (17) is formed by at least two lower (38) and upper (39) modular extension units which are operable separately or simultaneously for deployment and retraction and which are connected to each other at an angle of 90° effecting the angling of the upper extension unit (39) above a hedge (49), and in that the modular extension units (38, 39) are connected for pivoting at the ends thereof to lower (43, 45) and upper (44, 46) flat base elements in the manner of a deformable parallelogram, the extension units each being operated for deployment and retraction by a respective deployment ram (40) and (41).

6. Hedge-cutting robot according to claim 5, characterised in that the complex articulation (52) is formed by a first and a second chassis-frame (53) and (54), respectively, the first chassis-frame (53) being mounted in a fixed manner behind the upper modular extension unit (39), and the second chassis-frame being articulated to the first chassis-frame (53) pivotably about a support axis (55) which extends in a direction perpendicular to the plane of the first chassis-frame (53), the complex articulation (52) being extended by a stage (56) articulated to the second chassis-frame (54) pivotably about an axis (57) which extends in a direction which is perpendicular to the support axis (55) in front of it, and in that the pivoting of the chassis-frame (54) about its support axis (55) is effected by means of an assembly of two hydraulic control rams (58), whose sequential operation allows the chassis-frame (54) to be pivoted upwards or downwards from the desired angle about its support axis (55), the tilting movement of the support stage (56) about its axis (57) of articulation to the chassis-frame (54) being effected by means of a second assembly of two hydraulic control rams (59).

7. Hedge-cutting robot according to any one of the preceding claims, characterised in that the tool-holder segment (20) is mounted for pivoting in the extension of the cutting arm (19) about a pivot axis (64), the cutting arm (19) being itself mounted for pivoting about a pivot axis (60) on the support stage (56), and in that a first ram (61) for maintaining and immobilising in a stable work position the cutting arm (19) is mounted between the cutting arm (19) and a support rod (62) connected to the support stage (56), and in. that two other rams (63) arranged in parallel with and on both sides of the cutting arm (19) operate the tool-holder segment (20) by means of pendular movements about the pivot axis thereof (64) on the cutting arm (19) by means of a return system (65).

8. Hedge-cutting robot according to claim 7, characterised in that the return system (65) comprises a chain (66) whose ends are connected to the ram operating rods (63), the chain (66) being engaged with a toothed wheel (67) mounted for pivoting driving at the free end of the tool-holder segment (20).

9. Hedge-cutting robot according to any one of the preceding claims, characterised in that the hedge-cutting tool (16) is carried by the tool-holder segment (20) by means of a housing (68) which is able to pivot about the longitudinal axis of symmetry of the tool-holder segment (20) between two end work positions separated by 180°, in one or other of which positions it is immobilised.

10. Hedge-cutting robot according to any one of the preceding claims, characterised in that, for the adjustment and stabilisation thereof in a stable work position, the chassis-base (2) has two front and rear support means (4) for the adjustment of its longitudinal horizontality arranged at a distance from both sides of a first longitudinal edge (7) of the chassis-base (2), the means for adjusting the horizontality of the chassis-base (2) being complemented by a lifting/tilting assembly (9) with a frame (10) which is movable for tilting about the longitudinal and transverse axes of the base (2) in order to ensure the transverse horizontality of the chassis-base (2).

11. Hedge-cutting robot according to claim 10, characterised in that the support means (4) are each composed of a stay (5), each of which is mounted at the free end of an extensible side member (6), and are operated by a vertical compensation ram (8) under the effect of which they are lowered until resting against the ground, which allows the position of each of the ends of the first longitudinal side (7) of the chassis-base (2) to be modified in order to bring them into the same plane of longitudinal horizontality, and in that the movable frame (10) is arranged below the chassis-base (2) and is connected thereto by means of longitudinal rods (11) and transverse rods (12) which, arranged alternately relative to each other, are mounted in articulation to pivot at their ends between the movable frame (10) and the chassis-base (2), the frame (10) being complemented by two stays (13) which allow, by pressing against the ground, the chassis-base (2) to be lifted at the second longitudinal portion (14) thereof in order to ensure the transverse horizontality thereof, the inclination of the frame (10) being ensured by two homologous compensation rams (15) which are articulated to the movable frame (10) in accordance with three degrees of freedom.

12. Hedge-cutting robot comprising a four-wheeled movable support which is self-propelled or which can be driven manually or be coupled to a tractor acting as a movable platform for cutting hedges, bushes and, more generally, all types of woody vegetation planted in a row(s), characterised in that it comprises:
- an industrial robot arm mounted articulated to the movable platform, it being possible for the industrial robot arm to move from a lowered rest position to an extended work position in which it forms a support frame,
- a complex articulation (52) forming the end of the robot arm carrying a cutting assembly (18) formed by a cutting arm (19), operated to move pivotably in a work plane and extended by a tool-holder segment (20) of the hedge-cutting type (16), itself mounted to pivot at the end of the cutting arm (19),
- means (4, 9) for adjusting and stabilising the movable platform with automatic levelling allowing independent adjustment of the angle of inclination thereof relative to each of the longitudinal and transverse axes thereof for arrangement thereof in a stable horizontal work position.

13. Hedge-cutting robot according to claim 1, characterised in that the operation is remote-controlled and managed from a management and control unit acting on the hydraulic distributors which function at full-power or zero and at intermediate levels using a motor fluid under pressure generated by a hydraulic plant.

14. Hedge-cutting robot according to claim 1, characterised in that the level adjustment of the horizontal and vertical cutting planes is managed automatically using inclination sensors.

15. Hedge-cutting robot according to claim 1, characterised in that the cutting angle referenced relative to the vertical is stored.

## Patentansprüche

1. Heckenschneidroboter mit einem fahrenden Traggestell mit Eigenantrieb und vier Rädern oder das manuell gelenkt oder an eine Zugmaschine angekoppelt werden kann, die als Grundfahrgestell (2) dient, um Hecken, Büsche und allgemein alle gehölzartigen Pflanzen zu beschneiden, die in Reihe(n) gepflanzt sind,
**dadurch gekennzeichnet**, daß
er sich zusammensetzt aus:
einem klappbarem mehrgelenkigem Ausleger (17) mit Zentralkörper (21) und Trägerplatte (22), die eine seiner äußersten Enden darstellt, durch welche der Zentralkörper (21) gelenkig auf einem vertikalen Tragelement (23) angebracht ist, das von dem Grundfahrgestell (2) getragen wird, wobei der klappbäre Ausleger von einer abgesenkten Ruheposition in eine ausgefahrene Arbeitsposition bringbar ist, in der er einen Portalrahmen bildet,
einem komplexen Gelenk (52), das das andere äußerste Ende des klappbaren Auslegers (17) bildet und eine Schneideinheit (18) trägt, die aus einem Schneidarm (19) besteht, der zu Schwenkbewegungen in einer Arbeitsebene veranlaßt wird und durch einen Werkzeugträgerabschnitt (20) mit einem Heckenzuscheideelement (16) verlängert ist, das selbst am äußersten Ende des Schneidarmes (19) schwenkbar angebracht ist,
Stell- und Stabilisierungsmitteln (4,9) des Grundfahrgestells (2) oder des vertikalen Tragelementes (23) mit selbsttätiger Niveaueinstellung, die eine Regulierung unabhängig von dessen Neigungswinkel im Verhältnis zu jeder seiner Längs- und Querachsen ermöglicht, um es in eine stabile horizontale Arbeitsposition zu bringen.

2. Heckenschneidroboter nach Anspruch 1,
**dadurch gekennzeichnet**, daß
das vertikale Tragelement (23) im allgemeinen eine H-Form aufweist und aus zwei vertikalen Trägern (24) besteht, die mit Hilfe von Stützstangen (25) verbunden und versteift sind, die schräg zwischen den Trägern (24) und dem Grundfahrgestell (2) angebracht sind.

3. Heckenschneidroboter nach Anspruch 2,
**dadurch gekennzeichnet**, daß
die Trägerplatte (22) in der Längssymmetrieebene des Grundfahrgestells (2) nach oben oder nach unten schwenkbar angebracht ist, wobei die Trägerplatte (22) ebenfalls schwenkbar angebracht ist, so daß sie beiderseits der Längssymmetrieebene des Grundfahrgestells (2) unter Einwirkung einer Angleichungsantriebskraft schwenkbar ist, die auf ein durch ein Lager (28) gebildetes Gelenk einwirkt, das aus einer Einheit (33) von zwei beweglich und spielfrei angebrachten Rollen, die auf zwei horizontalen unteren (34). und oberen (35) Rollbahnen am äußersten Ende des entsprechenden Trägers (24) des Tragelements (23) angebracht sind,
und aus einem Lager (29) besteht, das gegenüberliegend angeordnet und aus einem axial schwenkbaren Gelenk gebildet ist, wobei dieses Gelenk die Trägerplatte (22) mit dem feststehenden Tragelement (23) verbindet.

4. Heckenschneidroboter nach Anspruch 3,
**dadurch gekennzeichnet**, daß
die Ausgleichsantriebskraft von einem Schubzylinder (36) geliefert wird, der mittels seiner Stange mit einem Ende (37) mit der aus zwei beweglichen Rollen bestehenden Einheit (33) verbunden ist, die die Drehbewegung der Trägerplatte (22) beiderseits der Längssymmetrieebene des Grundfahrgestells (2) zwischen zwei gegenüberliegenden, durch den Weg des Zylinders (36) festgelegten Endpositionen realisiert, und dadurch, daß zwei Steuerzylinder (32), die auf einer gelenkigen Gabel zwischen der Platte (22) und dem Grundfahrgestell (2) angebracht sind, die Klappbewegung der Trägerplatte (22) in der Längssymmetrieebene des Grundfahrgestells (2) mit dem Ziel herbeiführen, die Ausrichtung der allgemeinen Richtung der Arbeitsebene mit derjenigen der Hecke durchzuführen.

5. Heckenschneidroboter nach einem der Ansprüche 2 bis 4,
**dadurch gekennzeichnet**, daß
der ansteigende Zentralkörper (21) des Auslegers (17) aus mindestens zwei unteren (38) und oberen (39) Erweiterungseinheiten besteht, die separat oder gleichzeitig ausklappbar bzw. einklappbar und in einem Winkel von 90° miteinander verbunden sind, wodurch die Rückholung der oberen Erweiterungseinheit (39) über einer Hecke (49) bewirkt wird, wobei die modularen Erweiterungseinheiten (38,39) mittels ihrer äußersten Enden drehbar mit unteren (43,45) und oberen (44,46) ebenen Grundelementen in Form eines verformbaren Parallelogramms verbunden sind, wobei jedes davon jeweils mittels eines Auseinanderklappzylinders (40) und (41) beim Auseinanderklappen und Einklappen betätigt wird.

6. Heckenschneidroboter nach Anspruch 5,
**dadurch gekennzeichnet**, daß
das komplexe Gelenk (52) jeweils aus einem ersten und einem zweiten Rahmengestell (53) und (54) besteht, wobei das erste Rahmengestell (53) nach der modularen oberen Erweiterungseinheit (39) fest angebracht, und das zweite Rahmengestell auf dem ersten Rahmengestell (53) um eine Tragachse (55) gelenkig drehbar angebracht ist, die sich in einer zur Ebene des ersten Rahmengestells (53) senkrechten Richtung erstreckt, wobei sich das komplexe Gelenk (52) mittels einer Platte (56) fortsetzt, die auf dem zweiten Rahmengestell (54) um eine Achse (57) gelenkig drehbar gelagert ist, die sich in einer zur zuvor erwähnten Tragachse (55) senkrechten Richtung erstreckt, wobei die Drehung des Rahmengestells (54) um seine Tragachse (55) mittels einer Einheit aus zwei hydraulischen Steuerzylindern (58) durchgeführt wird, deren sequentielle Betätigung die Veranlassung einer Drehbewegung des Rahmengestells (54) im gewünschten Winkel nach oben oder nach unten um seine Tragachse (55) ermöglicht, wobei die Klappbewegung der Trägerplatte (56) um ihre Gelenkachse (57) auf dem Rahmengestell (54) mittels einer zweiten Einheit aus zwei hydraulischen Steuerzylindern (59) durchgeführt wird.

7. Heckenschneidroboter nach einem der vorstehenden Ansprüche,
**dadurch gekennzeichnet**, daß
der Werkzeugträgerabschnitt (20) in der Verlängerung des Schneidarmes (19) um eine Drehachse (64) drehbar angebracht ist, wobei der Schneidarm (19) selbst um eine Drehachse (60) auf der Trägerplatte (56) drehbar und ein erster Zylinder (61) für die Aufrechterhaltung und Arretierung des Schneidarms (19) in einer stabilen Arbeitsposition zwischen diesem und einer mit der Trägerplatte (56) verbundenen Stützstange (62) angebracht ist, und zwei weitere, parallel und beiderseits des Schneidarms (19) angeordnete Zylinder (63) den Werkzeugträgerabschnitt (20) zu Pendelbewegungen um seine Drehachse (64) auf dem Schneidarm (19) mittels eines Rückholsystems (65) veranlassen.

8. Heckenschneidroboter nach Anspruch 7,
**dadurch gekennzeichnet**, daß
das Rückholsystem (65) eine Kette (66) aufweist, deren äußerste Enden mit den Betätigungsstangen der Zylinder (63) verbunden sind und die mit einem Zahnrad (67) in Eingriff steht, das am äußersten freien Ende des Werkzeugträgerabschnitts (20) so angebracht ist, daß es einen Drehantrieb bewirkt.

9. Heckenschneidroboter nach einem der vorstehenden Ansprüche,
**dadurch gekennzeichnet**, daß
das Heckenschneidwerkzeug (16) durch den Werkzeugträgerabschnitt (20) mittels eines Gehäuses (68) getragen wird, das um die Symmetrielängsachse des Werkzeugträgerabschnitts (20) zwischen zwei extremen, voneinander um 180° getrennten Arbeitspositionen drehbar ist, und in einer dieser Positionen arretiert wird.

10. Heckenschneidroboter nach einem der vorstehenden Ansprüche,
**dadurch gekennzeichnet**, daß
das Grundfahrgestell (2) für seine Regulierung und Stabilisierung in einer stabilen Arbeitsposition zwei vordere und hintere Stützmittel (4) für die Einstellung seiner Längshorizontalität, die aus der Distanz eines ersten Längsrandes (7) des Grundfahrgestells (2) herrührt, wobei die Einstellungsmittel für die Horizontalität des Grundfahrgestells (2) durch eine Hub-Klappeinheit (9) mit beweglichem Rahmen (10) vervollständigt wird, um die Querhorizontalität des Grundfahrgestells (2) zu gewährleisten.

11. Heckenschneidroboter nach Anspruch 10,
**dadurch gekennzeichnet**, daß
die Stützmittel (4) jeweils aus einem Stützfuß (5) bestehen, von denen jeder an dem äußersten freien Ende eines ausfahrbaren Trägers (6) angebracht ist und durch einen vertikalen Ausgleichskolben (8) betätigt wird, unter dessen Einwirkung sie so lange absinken, bis sie sich gegen den Boden abstützen, wodurch eine Veränderung der Position jedes der äußersten Enden der ersten Längsseite (7) des Grundfahrgestells (2) ermöglicht wird, um sie in dieselbe horizontale Längsebene zu bringen, wobei der bewegliche Rahmen (10) unter dem Grundfahrgestell (2) angeordnet und mit diesem mittels Längs-(11) und Querstangen (12) verbunden ist, die abwechselnd gelenkig drehbar mit ihren äußersten Enden zwischen dem beweglichen Rahmen (10) und dem Grundfahrgestell (2) angebracht sind, wobei der Rahmen (10) durch zwei Stützfüße (13) vervollständigt wird, die durch Abstützung am Boden eine Hebung des Grundfahrgestells (2) in seinem zweiten Längsteil (14) ermöglichen, um dessen Querhorizontalität zu gewährleisten, wobei die Neigung des Rahmens (10) durch zwei homologe Ausgleichszylinder (15) sichergestellt ist, die auf dem beweglichen Rahmen (10) in drei Freiheitsgraden angebracht sind.

12. Heckenschneidroboter mit einem fahrenden Traggestell mit Eigenantrieb und vier Rädern oder das manuell gelenkt oder an eine Zugmaschine angekoppelt werden kann, das als Grundfahrgestell dient, um Hecken, Büsche und allgemein alle gehölzartigen Pflanzen zu beschneiden, die in Reihe(n) gepflanzt sind,
**dadurch gekennzeichnet**, daß
er sich zusammensetzt aus:
einem auf der fahrenden Plattform angebrachten Industrieroboterarm, wobei der Industrieroboterarm sich aus einer abgesenkten Ruheposition in eine ausgefahrene Arbeitsposition bewegen kann, in der er einen Portalrahmen bildet,
einem komplexen Gelenk (52), das das äußerste Ende des Industrieroboterarms bildet und eine Schneideinheit (18) trägt, die aus einem Schneidarm (19) besteht, der in Form von Schwenkbewegungen in einer Arbeitsebene betätigt wird und durch einen Werkzeugträgerabschnitt (20) mit einem Heckenzuscheideelement (16) verlängert ist, der selbst am äußersten Ende des Schneidarmes (19) schwenkbar angebracht ist, Stell- und Stabilisierungsmitteln (4,9) der fahrenden Plattform mit selbsttätiger Niveaueinstellung, die eine Regulierung ermöglicht, die unabhängig von dessen Neigungswinkel im Verhältnis zu jeder seiner Längs- und Querachsen ist, um sie in eine stabile horizontale Arbeitsposition zu bringen.

13. Heckenschneidroboter nach Anspruch 1,
**dadurch gekennzeichnet**, daß
der Betrieb per Fernbedienung erfolgt und von einer Lenkungs- und Steuereinheit aus geführt wird, die mittels einer unter von einer Hydraulikenergieerzeugungseinheit erzeugtem Druck stehenden, antreibenden Flüssigkeit auf nach dem Alles-oder-Nichts- und nach dem Proportionalprinzip arbeitende Hydraulikventile wirkt.

14. Heckenschneidroboter nach Anspruch 1,
**dadurch gekennzeichnet**, daß
die Regulierung der horizontalen und vertikalen Schneidebenen automatisch von Querneigungsmessern geführt wird.

15. Heckenschneidroboter nach Anspruch 1,
**dadurch gekennzeichnet**, daß
der zur Vertikalen in Beziehung gesetzte Schneidwinkel gespeichert wird.
